Europäisches Patentamt

(19) European Patent Office

Office européen des brevets

(11) Numéro de publication: **0 248 711 B1**

(12) **FASCICULE DE BREVET EUROPEEN**

(45) Date de publication du fascicule du brevet: 06.02.91

(51) Int. Cl.⁵: **H 04 N 7/133**

(21) Numéro de dépôt: 87401183.6

(22) Date de dépôt: 26.05.87

(54) **Procédé de codage par transformation pour la transmission de signaux d'image.**

(30) Priorité: 29.05.86 FR 8607713

(43) Date de publication de la demande:
09.12.87 Bulletin 87/50

(45) Mention de la délivrance du brevet:
06.02.91 Bulletin 91/06

(84) Etats contractants désignés:
DE GB IT SE

(56) Documents cités:
**US-A-4 245 248**

**ICASSP'85 PROCEEDINGS - IEEE INTERNATIONAL CONFERENCE ON ACOUSTICS, SPEECH AND SIGNAL PROCESSING, Tampa, Florida, 26-29 mars 1985, vol. 1, pages 371-374, IEEE; R.H.J.M. PLOMPEN et al.: "A new motion-compensated transform coding scheme"**

(73) Titulaire: **Guichard, Jacques**
**8/10 rue des Morillons**
**F-75015 Paris (FR)**
(73) Titulaire: **EUDE, Gérard**
**26, allée Jean Bart**
**F-77200 Torcy (FR)**

(72) Inventeur: **Guichard, Jacques**
**8/10 rue des Morillons**
**F-75015 Paris (FR)**
Inventeur: **EUDE, Gérard**
**26, allée Jean Bart**
**F-77200 Torcy (FR)**

(74) Mandataire: **Mongrédien, André et al**
**c/o BREVATOME 25, rue de Ponthieu**
**F-75008 Paris (FR)**

(56) References cited:
**GLOBECOM'85 IEEE GLOBAL TELECOMMUNICATIONS CONFERENCE, New Orleans, Conference Record, vol. 2, 2-5 décembre 1985, pages 689-693, IEEE; A. FURUKAWA et al.: "Coding efficiency analysis for motion-compensated interframe DPCM with transform coding"**

Courier Press, Leamington Spa, England.

EP 0 248 711 B1

# EP 0 248 711 B1

(56) References cited:
THE BELL SYSTEM TECHNICAL JOURNAL, vol.
58, no. 7, septembre 1979, pages 1703-1717,
American Telephone and Telegraph Co., US;
A.N. NETRAVALI et al.: "Motion-compensated
transform coding"

IEEE TRANSACTIONS ON COMMUNICATIONS,
vol. COM-29, no. 12, pages 1799-1808, IEEE,
New York, US; JASWANT R. JAIN et al.:
"Displacement measurement and its application
in interframe image coding"

## Description

La présente invention a pour objet un procédé de codage par transformation pour la transmission de signaux d'image. Cette invention concerne le traitement en temps réel de signaux d'information de type séquentiel, tels que les signaux vidéo, dans le but de comprimer le volume des données nécessaires pour représenter cette image afin de la transmettre avec un débit binaire minimum sur une ligne de transmission. Le procédé de l'invention s'applique notamment en télévision, en visioconférence ou en visiophonie. Il peut également être appliqué aux images à variations lentes, tel qu'en télésurveillance.

On connaît de nombreux système de codage d'image pour comprimer un signal d'image afin de pouvoir transmettre cette image sur une ligne de transmission avec un débit binaire réduit. On pourra par exemple se reporter aux documents EP—A2—0084270, EP—A2—0123456 et UP—4196188 dans lesquels sont décrits différents systèmes de codage d'image.

Dans ces systèmes de codage d'image, et de manière générale dans les systèmes de codage d'image récents, on exploite au maximum la redondance temporelle du signal d'image, c'est-à-dire que pour coder une image, on tient compte de l'image précédente.

Un premier type de codage connu, appelé codage inter-image, consiste à comparer une image à coder à l'image précédente et à ne transmettre, après codage, que des informations relatives à la partie de l'image qui est en mouvement. Un autre type connu de codage, appelé codage par estimation de mouvement, consiste à anticiper le mouvement dans l'image en estimant une image au vue de l'image précédente, et à ne transmettre que des informations relatives à la différence entre cette image estimée et l'image effectivement reçue.

De manière classique, le système de codage d'image comprend également un moyen de transformation pour appliquer un opérateur de transformation à ladite image. Cette opération de transformation traduit l'image du domaine spatial dans un domaine fréquentiel. L'opération de transformation peut précéder ou suivre le codage inter-image ou par estimation de mouvement appliqué à l'image.

La transformation d'une image présente l'intérêt que dans l'espace transformé, les coefficients obtenus sont assez bien statistiquement décorrélés, et que les caractéristiques de l'image sont contenues dans un nombre de coefficients plus faibles que dans l'image non transformée. La transformation est donc avantageuse notamment car elle permet de réduire le nombre de coefficients associés à l'image, donc le nombre de bits nécessaires pour transmettre cette image sur une ligne de transmission. De plus, il est possible de supprimer, dans l'image transformée, les coefficients de faible amplitude, ou de les quantifier grossièrement, sans nuire de manière sensible à la qualité de l'image transmise.

Cette suppression des coefficients de faible amplitude correspond à un effet de filtrage spatial non linéaire qui est utilisée comme technique de masquage pour réguler le débit sur la ligne de transmission. En effet, lorsque le mouvement devient important dans une image, la quantité d'information à transmettre augmente. Or, le débit binaire sur la ligne de transmission devant rester constant, la régulation se fait en diminuant l'importance des coefficients correspondants au détail de l'image. L'image apparît légèrement plus floue, dans la zone en mouvement de l'image, mais l'oeil ne perçoit guère de différence à cause précisément de ce mouvement.

En pratique, une image est divisée en une pluralité de blocs avant d'être traitée, soit par le moyen de codage inter-image ou par estimation de mouvement, soit par l'opérateur de transformation. Ceci permet de mieux cerner les parties de l'image qui sont modifiées entre deux images successives et donc de réduire le débit sur la ligne de transmission, puisque seules ces parties modifiées sont codées et transmises. Cette transmission consiste, dans le cas du codage par estimation de mouvement à émettre, pour chaque bloc en mouvement, un vecteur de déplacement indiquant le déplacement du bloc entre l'image précédente et l'image courante.

Il est clair que les mouvements des différentes parties de l'image sont d'autant mieux suivis que les blocs sont petits, mais le nombre de vecteurs de déplacement à transmettre est alors plus grand.

En revanche, plus un bloc est grand, et plus le nombre de vecteur de déplacement à transmettre est faible, mais la probabilité augmente que deux objets, se déplaçant de manière indépendante, se trouvent à l'intérieur d'un même bloc. Ceci diminue l'efficacité de la prédiction du vecteur de déplacement.

Une autre raison pour laquelle une image est divisée en blocs tient au rôle de la transformée elle-même, bein qu'il soit envisageable aujourd'hui d'appliquer une seule transformation à toute une image. Après la transformation d'un bloc, les coefficients transformés obtenus sont en partie décorrélés. Ces coefficients sont comparés à un seuil et les coefficients de faible amplitude dont l'absence ne modifie pas de manière sensible la qualité de l'image sont supprimés. Les coefficients sont ensuite classés, codés et transmis.

Compte tenu des propriétés de décorrélation de l'opération de transformation, il n'est pas nécessaire de trop augmenter la taille d'un bloc pour décorréler deux objets dans l'image.

Des études ont montré que la longueur de corrélation dans l'image composée d'environ 625 lignes et 720 points par ligne étaient de l'ordre de 32. Il est donc intéressant d'utiliser une taille de bloc lié à cette longueur de corrélation.

Dans les systèmes de codage connus, une image est décomposée en blocs identiques ayant une taille fixe. Les tailles de blocs couramment utilisées sont de 8×8 pixels, 16×16 pixels, et parfois de 32×32 pixels. Le facteur de compression est d'autant meilleur que les blocs sont grands, mais le gain de compression est plus faible lorsque l'on passe de 16 à 32 pixels que lorsque l'on passe de 8 à 16 pixels.

Cette taille résulte d'un compromis entre le souhait d'avoir des blocs de grande taille pour limiter le nombre de vecteurs de déplacement et donc le débit binaire sur la ligne de transmission et le souhait d'avoir des blocs de petite taille pour mieux distinguer dans l'image des petits objets proches ayant des mouvements différents. La taille d'un bloc est fixée en fonction de deux critères opposés, et n'est en définitive jamais satisfaisante.

L'invention a pour but de pallier ces inconvénients.

L'invention a pour objet un procédé de codage par transformation permettant d'affecter un vecteur de déplacement aussi bien aux objets mobiles de grande taille qu'aux objets mobiles de petite taille, ceci en respectant le débit binaire autorisé sur la ligne de transmission.

Le procédé de l'invention se caractérisé en ce que la taille des blocs n'est pas fixe mais peut au contraire être fixée dynamiquement. Plus précisément, l'image est découpée en blocs n'ayant pas nécessairement la même taille et, s'il apparaît qu'un bloc n'est pas fixe, c'est-à-dire que ce bloc contient au moins un objet en mouvement, ledit bloc est lui-même décomposé en une pluralité de sous-blocs qui sont chacun traités indépendamment comme le sont les blocs dans les systèmes de codage connus.

De manière précise, l'invention a pour objet un procédé de codage par transformation pour la transmission sur une ligne de transmission d'un signal d'image composé d'une suite de trames contenant chacune une image, ledit procédé comprenant une première étape de décomposition de l'image en blocs, chaque bloc contenant un ensemble de données numériques organisé en matrice et représentant une partie de l'image, ledit procédé étant caractérisé en ce qu'il comprend, pour chaque bloc d'une image, une étape de détection de mouvement par comparaison dudit bloc de l'image courante avec le bloc correspondant de l'image précédente, et une deuxième étape qui, si aucun mouvement n'est détecté dans le bloc, est une émission sur la ligne de transmission d'un code de non-rafraîchissement du bloc et d'un code d'identification du bloc dans l'image, et qui, si un mouvement est détecté dans le bloc, est une décomposition du bloc en plusieurs sous-blocs et, pour chaque sous-bloc, une détection du mouvement dudit sous-bloc par comparaison avec le sous-bloc correspondant dans le bloc correspondant de l'image précédente, l'information contenue dans ledit sous-bloc étant codée et transmise en fonction du résultat de la dètection du mouvement.

Le procédé de l'invention n'est pas limité à un mode de codage particulier des sous-blocs en mouvement mais peut être utilisé quel que soit le codage et notamment le codage par estimation de mouvement ou le codage inter-image. Ce dernier n'est d'ailleurs qu'un cas particulier d'un codage par estimation de mouvement qui consiste à définir un vecteur de déplacement de valeur nulle.

De manière préférée, si aucun mouvement n'est détecté dans le sous-bloc, le procédé de l'invention consiste à émettre sur la ligne de transmission un code de non-rafraîchissement dudit sous-bloc et un code d'identification dudit sous-bloc dans l'image et, si un mouvement est détecté dans ledit sous-bloc, à calculer un sous-bloc réduit égal à la différence entre ledit sous-bloc et le sous-bloc correspondant de l'image précédente, et à émettre sur la ligne de transmission un code fonction dudit sous-bloc réduit.

Selon une caractéristique secondaire, ledit code fonction dudit sous-bloc réduit est un code représentatif dudit sous-bloc réduit transformé, par un opérateur de transformation spatio-temporelle et quantifié.

De manière avantageuse, on décompose chaque sous-bloc en mouvement en un ensemble de blocs élémentaires et, pour chacun desdits blocs élémentaires, on analyse le mouvement et on code ledit bloc élémentaire en fonction du résultat de la détection de mouvement.

De manière préférée, si aucun mouvement n'est détecté dans le sous-bloc, le procédé de l'invention consiste à émettre sur la ligne de transmission un code de non refraîchissement dudit sous-bloc et un code d'identification dudit sous-bloc dans l'image, et, si un mouvement est détecté dans ledit sous-bloc, à rechercher un vecteur de déplacement représentant le déplacement dudit sous-bloc entre l'image précédente et l'image courante, et à compenser le mouvement dudit sous-bloc en fonction dudit vecteur de déplacement, un code étant émis sur la ligne de transmission en fonction de ladite compensation.

De manière préférée, si la compensation est parfaite, c'est-à-dire si le sous-bloc est identique à un sous-bloc de l'image précédente, on émet sur la ligne de transmission un code représentatif du vecteur de déplacement et un code d'identification dudit sous-bloc dans l'image.

De manière préférée, si la compensation n'est pas parfaite, on calcule un sous-bloc réduit égal à la différence entre ledit sous-bloc et son estimation, c'est-à-dire le sous-bloc de l'image précédente décalé de la valeur du vecteur de déplacement, on code ledit sous-bloc réduit par une opération mathématique de transformation spatio-temporelle, et on émet sur la ligne de transmission un code représentatif des données numériques contenues dans ledit sous-bloc réduit transformé et un code d'identification du sous-bloc dans l'image.

Selon une autre variante avantageuse, on décompose chaque sous-bloc, dont la compensation n'est pas parfaite, en plusieurs parties appelées blocs élémentaires, et on compare chaque bloc élémentaire avec un bloc de même taille de l'image précédente pour détecter un mouvement, et on code chaque bloc élémentaire selon qu'il est fixe ou en mouvement.

Selon une caractéristique particulière, chaque bloc est de taile N×M, ou N et M sont des entiers pairs, et chaque sous-bloc est de taille N/2×M, N×M/2 ou N/2×M/2.

Selon une caractéristique secondaire, lorsque plusieurs sous-blocs d'un même bloc sont en mouvement, la décomposition du bloc en sous-blocs est reprise pour définir un sous-bloc en mouvement, contenant les précédentes sous-blocs en mouvement, et pour définir, éventuellement, un ou plusieurs sous-blocs fixes.

De manière préférée, l'opérateur de transformation appliqué au bloc ou au sous-bloc dont la compensation n'est pas parfaite est une transformée en cosinus discrète.

Les caractéristiques et avantages de l'invention ressortiront mieux de la description que va suivre, donnée à titre illustratif mais non limitatif, en référence aux dessins annexés, sur lesquels:

la figure 1 représente schématiquement un système de codage par transformation pour la mise en oeuvre du procédé de l'invention,

les figures 2a à 2d illustrent la décomposition d'une image en une pluralité de sous-blocs,

la figure 3 est un organigramme du procédé de l'invention dans le cas ou un bloc d'une image est décomposé en quatre sous-blocs identiques.

les figures 4 à 8 illustrent les différents cas possible de sous-blocs en mouvmeent et de sous-blocs fixes dans un bloc découpé en quatre blocs identiques,

la figure 9 illustre la recherche du vecteur de déplacement pour un sous-bloc en mouvement, et

la figure 10 illustre une variante de l'organigramme de la figure 3 consistant à décomposer un sous-bloc en blocs élémentaires lorsque la compensation de ce sous-bloc n'est pas parfaite.

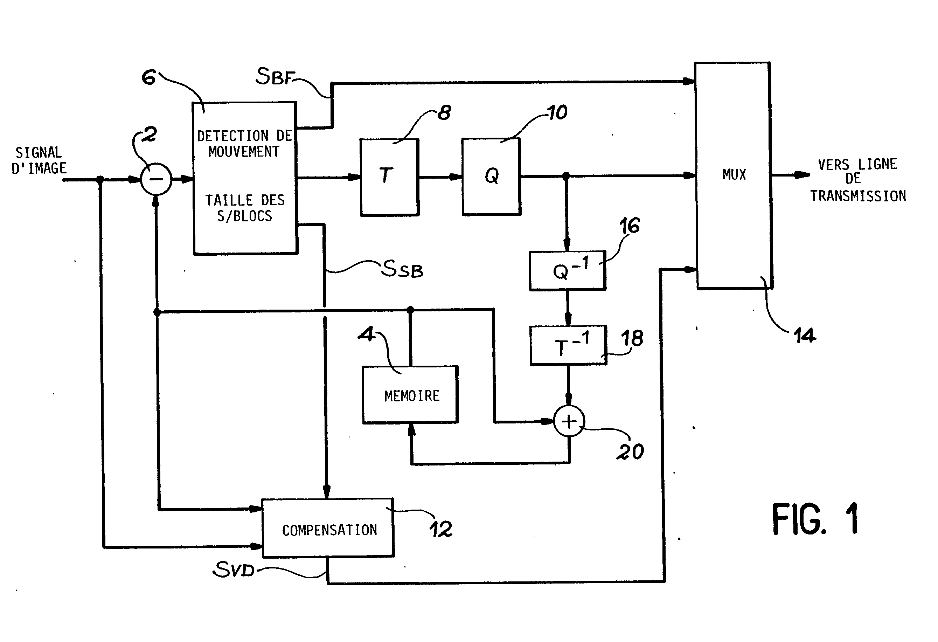

On a représenté sur la figure 1 un circuit de codage par transformation pour la mise en oeuvre du procédé de l'invention qui est, à titre d'exemple, un circuit de codage par estimation de mouvement.

Il comprend un soustracteur 2 recevant sur une entrée un bloc de l'image courante et sur une autre entrée un bloc de l'image précédente transmise an décodeur, cette image étant mémorisée dans une mémoire 4. La sortie du soustracteur 2 est reliée à l'entrée d'un détecteur de mouvement 6 comportant trois sorties: une première sortie pour délivrer un signal $S_{BF}$ de bloc fixe lorsque les deux blocs reçus en entrée du soustracteur sont identiques ou de sous-bloc fixe lorsque les deux blocs ne sont pas identiques mais que deux sous-blocs sont identiques, une deuxième sortie pour délivrer un signal $S_{SB}$ indiquant une décomposition en sous-blocs lorsque les blocs reçus à l'entrée du soustracteur ne sont pas identiques, et une troisième sortie pour délivrer un signal représentatif d'un sous-block en mouvement non compensé.

La troisième sortie du détecteur de mouvement 6 est reliée à l'entrée d'un moyen de transformation 8 dont la sortie est reliée à l'entrée d'un quantificateur 10.

Le circuit comprend également un moyen de compensation 12 recevant sur une entrée le bloc d'image à coder, et dont une autre entrée est reliée à la sortie de la mémoire 4 contenant l'image précédente. La compensation de mouvement est appliquée au bloc de l'image courante ou à des sous-blocs de ce bloc selon le signal $S_{SB}$ délivré par le détecteur de mouvement 6. Le moyen de compensation 12 délivre un signal $S_{VD}$ représentant le vecteur de déplacement pour la compensation dudit bloc ou desdits sous-blocs de l'image courante.

Ce signal est reçu sur une entrée d'un multiplexeur 14 qui reçoit sur une deuxième entrée le signal $S_{BF}$ délivré par le détecteur de mouvement 6 et sur une troisième entrée le signal délivré par le quantificateur 10. La sortie du multiplexeur 14 est reliée à la ligne de transmission.

La mémoire 4 contient l'image précédente telle qu'elle est reçue par le décodeur situé à l'autre extrémité de la ligne de transmission. Pour la mémorisation de cette image, le circuit comprend un quantificateur inverse 16 dont l'entrée est reliée à la sortie du quantificateur 10, un moyen de transformation inverse 18 dont l'entrée est reliée à la sortie du quantificateur inverse 16, et un additionneur 20 dont une entrée est reliée à la sortie du moyen de transformation inverse 18 et dont l'autre entrée est reliée à la sortie de la mémoire 4, la sortie de l'additionneur 20 étant reliée à l'entrée de la mémoire 4.

Le circuit représenté sur la figure 1 a une structure classique, sauf en ce qui concerne le moyen de détection 6 qui, ici, ne détecte pas seulement le mouvement sur un bloc d'image mais également sur des sous-blocs de ce bloc. Il délivre ensuite au moyen de compensation 12 un signal $S_{SB}$ indiquant la décomposition du bloc en plusieurs sous-blocs ainsi que la forme et la position des sous-blocs.

On va maintenant décrire le fonctionnement, conformément à l'invention, du circuit de codage de la figure 1.

Le procédé de l'invention comporte deux étapes principales qui sont, d'une part, une étape de détection de mouvement d'un bloc de l'image courante, par comparaison dudit bloc au bloc correspondant, c'est-à-dire occupant la même position dans l'image, de l'image précédente, et d'autre part, si un mouvement est détecté dans le bloc, une deuxième étape de décomposition du bloc en une pluralité de sous-blocs sur chacun desquels une détection de mouvement est effectée.

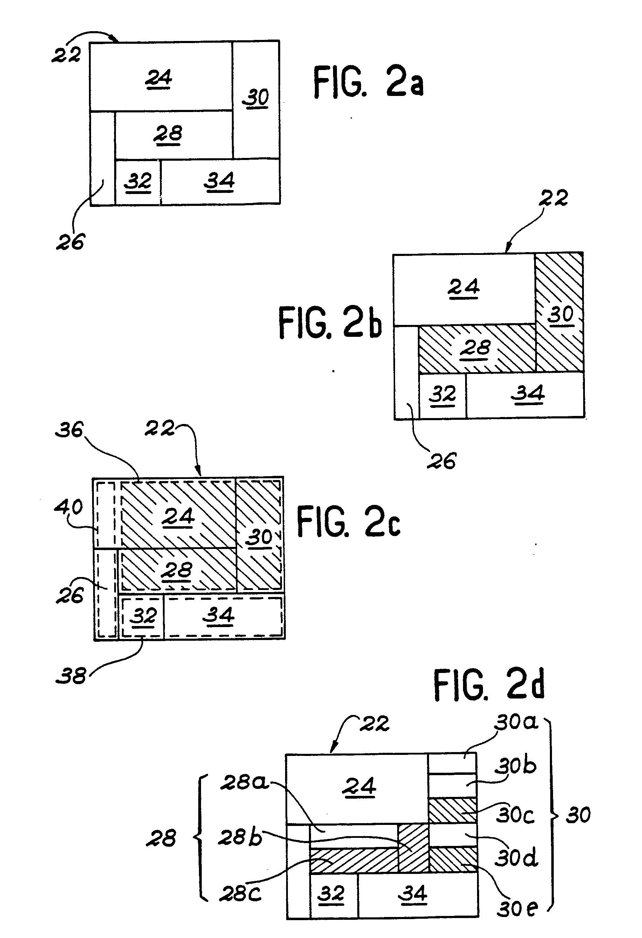

La décomposition d'un bloc en plusieurs sous-blocs peut être quelconque. Les sous-blocs ne sont pas nécessairement identiques. On a représenté, à titre d'exemple, sur la figure 2a la décomposition d'un bloc 22, en mouvement, en une pluralité de sous-blocs 24—34.

Une analyse de mouvement de chacun des sous-blocs est réalisée par le moyen de détection de mouvement 6. A titre d'exemple, supposons que les sous-blocs 28 et 30 sont en mouvement. Ces sous-blocs sont représentés sur la figure 2b par une zone hachurée.

Pour chacun des sous-blocs fixes 24, 26, 32, 34, un code d'identification du sous-bloc notant la taille du sous-bloc et sa position dans le bloc ou dans l'image est émis sur la ligne de transmission, avec un code de non refraîchissement dudit sous-bloc.

Pour chacun des sous-blocs 28, 30 en mouvement, on émet un signal représentatif du mouvement du sous-bloc. Dans le cas du circuit de la figure 1, chaque sous-bloc est compensé par recherche d'un sous-bloc de même taille dans l'image précédente et par transmission du vecteur de déplacement entre ledit sous-bloc et le sous-bloc identique de l'image précédente. Si la compensation n'est par parfaite, la différence entre le sous-bloc et l'estimation dudit sous-bloc déduite de l'image précédente est codée par transformation et quantification.

D'autres méthodes de codage d'un sous-bloc en mouvement sont connues. On peut par exemple transmettre un signal représentatif de la différence entre le sous-bloc en mouvement et le sous-bloc correspondant, c'est-à-dire occupant la même position dans l'image, de l'image précédente (codage inter-image).

Dans le cas de la figure 2b, chaque sous-bloc est traité séparément. Il peut être intéressant dans certain cas de regrouper les sous-blocs en mouvement, ou au moins certains d'entre eux, de manière à diminuer le nombre de sous-blocs en mouvement à transmettre.

Par exemple, comme on l'a représenté sur la figure 2c on peut définir un nouveau sous-bloc 36 incluant les sous-blocs en mouvement 28, 30. Ce sous-bloc 36 contient également une partie du sous-bloc fixe 24. Il est également possible de procéder à un regroupement des sous-blocs fixes restant. Sur la figure 2c, ces sous-blocs ont été regroupés en deux sous-blocs 38, 40.

Le réarrangement du bloc 22 en trois sous-blocs 36, 38, 40 dont un seul sous-bloc est en mouvement permet, dans certains cas, de réduire le débit binaire pour le codage de ce bloc.

Suivant une autre variante du procédé de l'invention, les sous-blocs en mouvement 28, 30, représentés sur la figure 2b peuvent, lorsqu'ils sont codés par compensation de mouvement et que la compensation n'est pas parfaite, être décomposés eux-même en plusieurs parties appelées blocs élémentaires.

A titre d'exemple, sur la figure 2d, le sous-bloc 28 a été décomposé en trois blocs élémentaires 28a, 28b, 28c, ces deux derniers étant en mouvement. De même, le sous-bloc 30 a été décomposé en 5 blocs élémentaires 30a—30e, dont les blocs élémentaires 30c et 30e sont en mouvement.

Une telle décomposition permet de mieux cerner les parties du bloc 22 qui sont en mouvement. Cependant, elle peut conduire à une parcellisation excessive du bloc 22, avec pour conséquence une augmentation du nombre de bits nécessaires à sa transmission.

Ce défaut peut toutefois être atténué en regroupant les blocs élémentaires en mouvement comme dans le cas de la figure 2c.

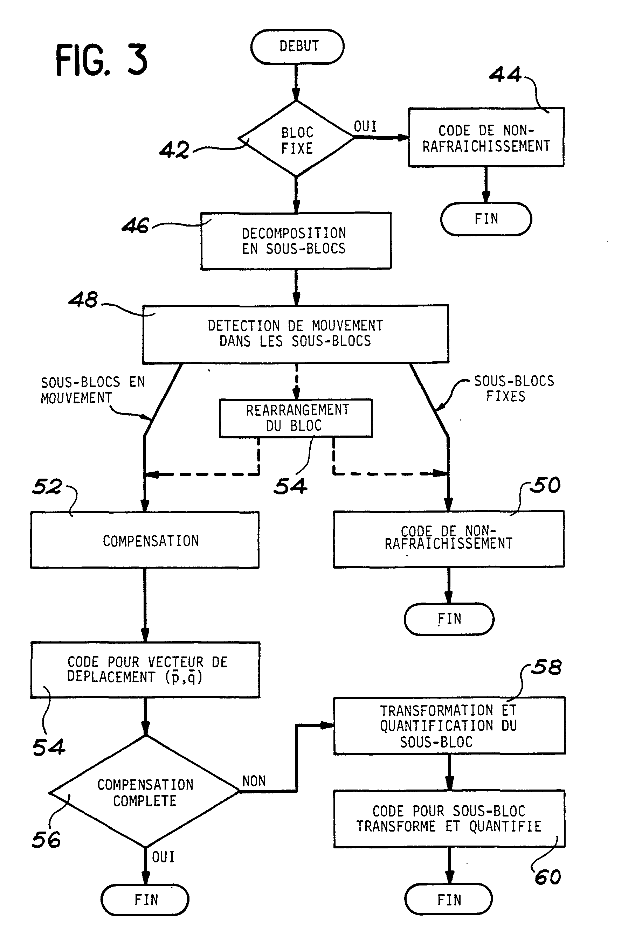

On va maintenant décrire en détail le procédé de l'invention de référence à l'organigramme de la figure 3. Ce procédé est appliqué séparément à chaque bloc d'une image reçue décomposée en blocs.

La première étape du procédé est un test 42 de détection de mouvement dans le bloc. Cette étape classique est réalisée, dans le circuit de la figure 1, par le soustracteur 2 qui reçoit sur une entrée le bloc et sur une autre entrée le bloc correspondant de l'image précédente, et le détecteur de mouvement 6 qui analyse la différence des blocs délivrés par le soustracteur 2.

Si les deux blocs sont identiques, le bloc de l'image courante est fixe et on émet sur la ligne de transmission, par une opération 44, un code de non refraîchissement du bloc et un code d'identification de ce bloc dans l'image.

Si au contraire le bloc est en mouvement, on procède, conformément à l'invention, a une opération 46 de décomposition du bloc en une pluralité de sous-blocs. Comme on l'a indiqué en référence aux figures 2a à 2d toute décomposition est possible. En particulier, les sous-blocs ne sont pas nécessairement identiques.

Toutefois, il peut être avantageux de décomposer un bloc de taille $N \times M$, où $N$ et $M$ sont des entiers pairs, en quatre sous-blocs identiques de taille $N/2 \times M/2$. Ceci permet en effet, pour certaines opérations de transformation réalisées par le moyen de transformation 8 (figure 1), d'utiliser le même opérateur de transformation pour le bloc complet et pour un sous-bloc ou un ensemble de deux sous-blocs. Nous reviendrons sur cette propriété des transformations dans la suite de la description.

L'opération 46 de décomposition en sous-blocs réalisée par le moyen de détection 6 (figure 1) est suivie d'une opération 48 de détection de mouvement dans les sous-blocs. Celle-ci est réalisée de la même manière que la détection de mouvement dans le bloc.

Les sous-blocs sont alors répartis dans deux ensembles, un ensemble de sous-blocs en mouvement et un ensemble de sous-blocs fixes. Pour les sous-blocs fixes, on procède comme pour un bloc fixe, c'est-à-dire que l'on émet un code de non refraîchissement dudit sous-bloc et un code d'identification dudit sous-bloc dans l'image (opération 50).

Pour les sous-blocs en mouvement, le traitement se poursuit par une opération de compensation 52. Celle-ci est réalisée par le moyen de compensation 12 du circuit de la figure 1.

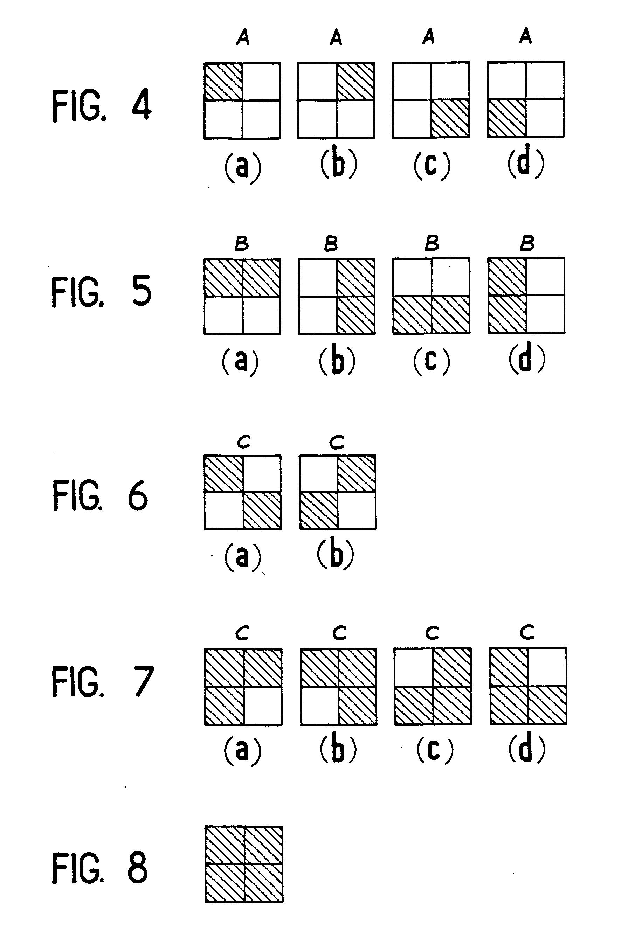

On a représenté sur les figures 4 à 8 les différents cas possibles de sous-blocs en mouvement dans un bloc en mouvement, dans lequel le bloc est décomposé en quatre sous-blocs identiques.

Les figures 4a à 4d illustrent les 4 possibilités correspondant à un seul sous-bloc en mouvement. De même, les figures 5a à 5d illustrent les quatres possibilités d'avoir deux sous-blocs contigus en mouvement et les figures 6a à 6b les deux possibilités d'avoir deux sous-blocs en mouvement disposés sur une même diagonale. Les figures 7a à 7d représentent les quatres possibilités d'avoir trois sous-blocs en mouvement et la figure 8 représente le cas ou les quatres sous-blocs sont en mouvement.

Selon l'invention, on peut compenser chaque sous-bloc en mouvement séparément. On peut également, comme on la représenté sur la figure 2c, regrouper plusieurs sous-blocs en mouvement pour définir un nouveau sous-bloc en mouvement. Cette opération optionnelle 54 est réalisée après l'opération 48 et avant les opérations 50 et 52.

A titre d'exemple, on peut regrouper en un seul sous-bloc en mouvement les deux sous-blocs en mouvement dans les figures 5a à 5d et, de la même manière regrouper en un seul sous-bloc fixe les deux sous-blocs fixes dans ces figures. On peut également regrouper les sous-blocs en mouvement dans les figures 6a à 7d. Le nouveau sous-bloc en mouvement est alors égal au bloc complet comme représenté sur la figure 8.

Après ce regroupement, on peut classer les blocs en mouvement en trois catégories A, B, C correspondant respectivement à des blocs dans lesquels le nouveau sous-bloc en mouvement a une taille d'un seul sous-bloc, de deux sous-blocs et de quatre sous-blocs. Ces catégories sont notées au-dessus des blocs sur les figures 4 à 8.

L'opération de compensation 52 est connue. Elle consiste à mesurer le déplacement du sous-bloc entre l'image précédente et l'image courante.

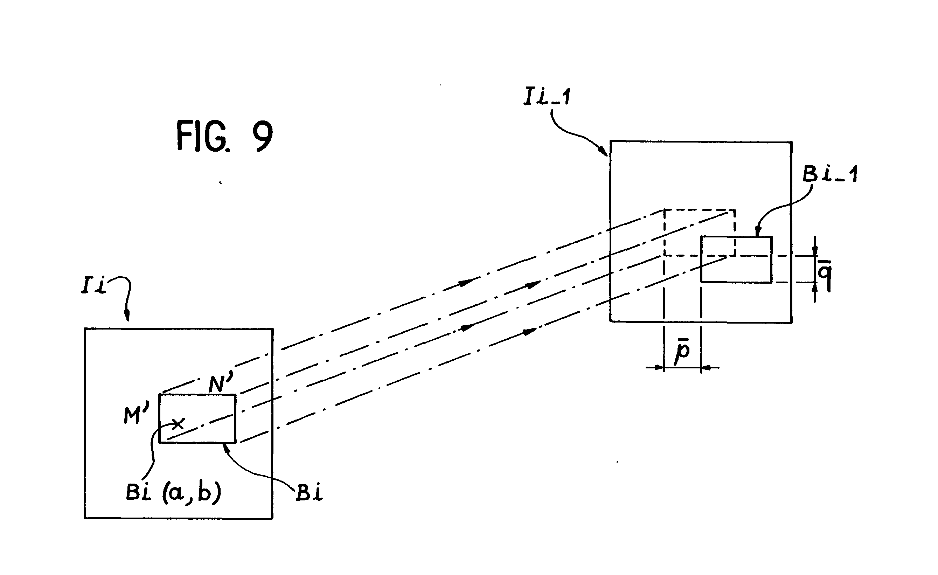

On a représenté sur la figure 9 un sous-bloc $B_i$ de taille $N' \times M'$, ou $N'$ est égal à N ou N/2 et $M'$ est égal à M ou M/2, de l'image courante $I_i$. Dans l'image précédente $I_{i-1}$, ce bloc, noté $B_{i-1}$, occupe une position différente. La compensation consiste à évaluer les coordonnées $\bar{p}$ et $\bar{q}$ du vecteur de déplacement dudit sous-bloc entre les deux images.

Plus précisément, il s'agit de calculer le terme $y_{n,m}(p,q)$ égal à

$$f[I_i(a+n,b+m)-I_{i-1}(a+n+p,b+m+q)]$$

où

$I_i(x,y)$ est la valeur du pixel de coordonnées (x,y) dans l'image $I_i$,

$f(u-v)$ est une mesure de l'écart des amplitudes entre deux points différents des deux images successives $I_i$ et $I_{i-1}$,

a et b sont les coordonnées du pixel de coin du bloc $B_i$,

p et q sont les coordonnées du vecteur de déplacement.

A titre d'exemple, on peut choisir pour fonction f la fonction d'erreur quadratique défini par $f(u-v)=(u-v)^2$, ou la fonction valeur absolue défini par $f(u-v)=|u-v|$.

La compensation consiste à trouver les valeurs $\bar{p}$ et $\bar{q}$ des coordonnées p, q du vecteur de déplacement de manière à minimiser:

$$\sum_{n=0}^{N-1} \sum_{m=0}^{M-1} y_{n,m}(p,q)$$

Selon le résultat, un bloc de catégorie C peut devenir un bloc parfaitement compensé, un bloc de catégorie A, de catégorie B ou il peut rester un bloc de catégorie C. De même un bloc de catégorie B peut être parfaitement compensé, ou donner un bloc de catégorie A ou rester un bloc de catégorie B. Enfin, un bloc de catégorie A peut être parfaitement compensé ou rester un bloc de catégorie A.

Pour chaque sous-bloc compensé, on procède à une opération 54 d'émission, sur la ligne de transmission, d'un code représentatif de la valeur du vecteur de déplacement et d'un code d'identification du sous-bloc.

Par un test 56, on détermine ensuite si le sous-bloc est parfaitement compensé. Si ce n'est pas le cas, on procède à une opération 58 de codage par transformation et de quantification du sous-bloc réduit égal à la différence entre le sous-bloc et son estimation (sous-bloc de l'image précédente décalé de la valeur du vecteur de déplacement).

La transformation est réalisée par le moyen de transformation 8 du circuit de la figure 1. Les transformées les plus utilisées sont la transformée en cosinus discrète, la transformée fortement corrélée discrète, la transformée de HADAMARD ou la transformée de HAAR.

Ces transformées présentent la propriété que les N/2 coefficients d'indice pair (les coefficients sont affectés d'un indice par la suite des N entiers compris entre 0 et N−1) délivrés par un opérateur de transformation de dimension N constituent la transformée de dimension N/2 lorsque l'opérateur reçoit une séquence de longueur N formée de N/2 valeurs non nulles suivies de N/2 valeurs nulles ou l'inverse. Ces propriétés sont décrites, dans le cas de la transformée en cosinus discrète, dans la demande de brevet français "Circuit de calcul rapide de la transformée en cosinus discrète", J. Guichard et Eric Cassimalis, déposée le 22 mai 1985 sous le n°8507717. Cette propriété est vraie pour la transformée en cosinus pour toute valeur paire de N, et pour les autres transformées pour les valeurs de N tel que $N=2^n$, où n est un entier. Il est donc possible d'utiliser un opérateur de transformation unique $N \times M$ pour calculer la transformée d'un bloc de taille $N \times M$ mais aussi des sous-blocs de taille $N/2 \times M$, $N \times M/2$ et $N/2 \times M/2$.

En effet, considérons un opérateur de transformation T de taille $N \times M$. Cet opérateur, appliqué à un bloc de taille $N \times M$, produit un bloc transformé F de taille $N \times M$. Pour un bloc de taille $N \times M$ tel que celui de la figure 5a, où les deux sous-blocs supérieurs sont en mouvement et les deux sous-blocs inférieurs sont fixes (les coefficients de ces sous-blocs sont nuls), le sous-bloc transformé G correspondant à la transformation des deux sous-blocs en mouvement se déduit du bloc transformé F du bloc complet de la manière suivante:

$$G_{ij}=F_{2ij}$$

où $0{\leqslant}i{\leqslant}(N/2)-1$ et $0{\leqslant}j{\leqslant}M-1$.

De la même manière, le sous-bloc transformé H du sous-bloc en mouvement de la figure 4a est défini par la relation suivante:

$$H_{ij}=F_{2i,2j}$$

où $0{\leqslant}i{\leqslant}(N/2)-1$ et $0{\leqslant}j{\leqslant}(M/2)-1$.

On aurait de même, pour le sous-bloc en mouvement de la figure 4b la relation $H_{ij}=F_{2i,2j}$.

Une autre méthode de calcul de la transformée des sous-blocs en mouvement dans les blocs des figures 4 et 5 consiste à symétriser ces blocs en replaçant les sous-blocs fixes par le ou les sous-blocs en mouvement.

Par exemple, dans le bloc de la figure 5a de la forme $B=[B_{ij}]$, où $0{\leqslant}i{\leqslant}N-1$ et $0{\leqslant}j{\leqslant}M-1$, dans lequel $B_{i,j}=0$ pour $i>(N/2)-1$, la symétrisation consiste à définir la valeur des coefficients des sous-blocs fixes par la relation $B_{i,j}=B_{N-1-i,j}$ pour $i>(N/2)-1$.

La transformée K de taille $N/2{\times}M$ du sous-bloc en mouvement se déduit de la transformée J de taille $N{\times}M$ du bloc symétrisé par la relation suivante:

$$K_{i,j}=1/2.J_{2i,j}$$

où $0{\leqslant}i{\leqslant}(N/2)-1$ et $0{\leqslant}j{\leqslant}M-1$.

Revenons maintenant à la figure 3. Pour les sous-blocs en mouvement qui ne sont pas parfaitement compensés on calcule un sous-bloc réduit égal à la différence entre ledit sous-bloc et son estimation et, par une opération 58, on transforme et on quantifie ledit sous-bloc réduit. L'étape suivante est une opération de codage 60 de ces sous-blocs réduits transformés quantifiés. Cette étape est réalisée classiquement par un codage de type Reed-solomon sur la suite des coefficients transformés quantifiés.

Dans le procédé de l'invention décrit en référence à la figure 3. Les sous-blocs réduits des sous-blocs incomplètement compensés sont transmis sous forme codée après avoir été transformés et quantifiés.

Ce traitement peut être remplacé par un autre traitement dans lequel chaque sous-bloc non compensé est lui-même décomposé en plusieurs blocs élémentaires, chaque bloc élémentaire étant ensuite traité comme le sont les sou-blocs.

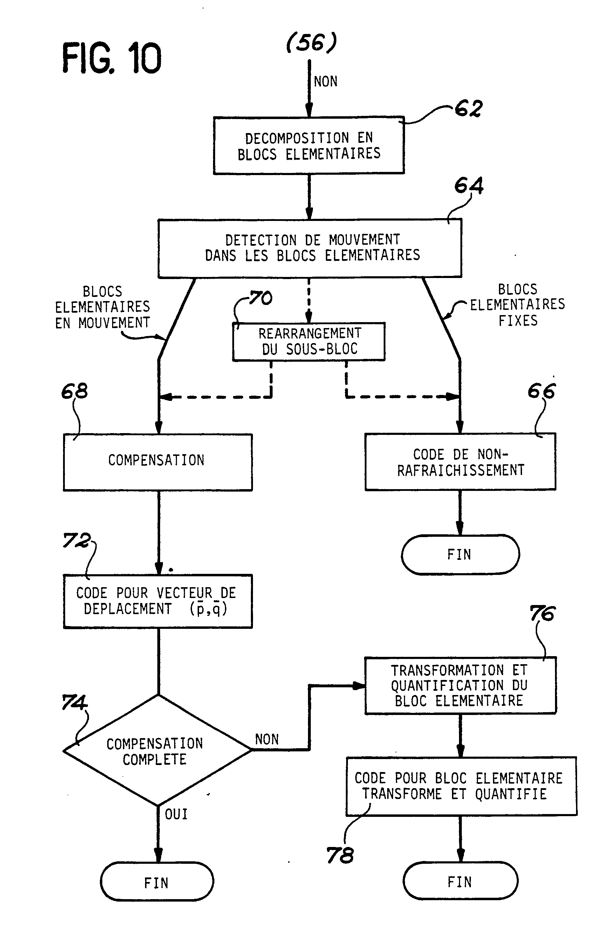

On a représenté sur la figure 10 un organigramme illustrant cette variante du procédé de l'invention. Le traitement comprend successivement une opération 62 de décomposition d'un sous-bloc non compensé en blocs élémentaires, une opération 64 d'analyse du mouvement dans les blocs élémentaires, une opération 66 d'émission d'un code de non-rafraîchissement pour les blocs élémentaires fixes, et une opération 68 de compensation sur les blocs élémentaires en mouvement.

Ces opérations 62, 64, 66 et 68 sont respectivement semblables aux opérations 46, 48, 50 et 52 relatives au traitement des sous-blocs.

Suivant une variante, l'opération 64 de détection de mouvement dans les blocs élémentaires peut être suivie d'une opération 70 de réarrangement des blocs élémentaires, analogue à l'opération 54 de l'organigramme de la figure 3.

Après l'opération de compensation 68, on procède, pour chaque bloc élémentaire compensé, dans une opération 72 à l'émission d'un code représentatif du vecteur de déplacement dudit bloc élémentaire et d'un code d'identification de ce bloc élémentaire. Ensuite, pour chaque bloc élémentaire on procède à un test 72 pour déterminer si la compensation est parfaite. Si ce n'est pas le cas, le bloc élémentaire réduit égal à la différence entre le bloc élémentaire et son estimation, c'est-à-dire le bloc élémentaire de l'image précédente décalé de la valeur du vecteur de déplacement, est transformé puis quantifié au cours d'une opération 76. Enfin, un code représentatif dudit bloc élémentaire quantifié est émis (opération 78).

Les étapes 72, 74, 76 et 78 appliquées aux blocs élémentaires sont respectivement analogues aux étapes 54, 56, 58 et 60 appliquées aux sous-blocs.

Suivant une variante simplifiée, l'étape 64 ou l'étape 70, le cas échéant, est suivie uniquement des étapes 76 et 78.

## Revendications

1. Procédé de codage par transformation pour la transmission sur une ligne de transmission d'un signal d'image composé d'une suite de trames contenant chacune une image, ledit procédé comprenant une étape de décomposition de l'image en blocs, chaque bloc contenant un ensemble de données numériques organisées en matrice et représentant une partie de l'image, ledit procédé comprenant pour chaque bloc, les étapes suivantes:

détection de mouvement du bloc par comparaison dudit bloc de l'image courante au bloc correspondant de l'image précédente,

si aucun mouvement n'est détecté dans le bloc, émission sur la ligne de transmission d'un code de non-rafraîchissement du bloc et d'un code d'identification du bloc dans l'image,

et étant caractérisé par l'étape suivante:

si un mouvement est détecté dans le bloc, décomposition du bloc en plusieurs sous-blocs, détection de mouvement dans chaque sous-bloc du bloc par comparaison au sous-bloc correspondant du bloc correspondant de l'image précédente, et émission sur la ligne de transmission d'un code fonction du mouvement du sous-bloc.

2. Procédé selon la revendication 1, caractérisé en ce qu'on décompose chaque sous-bloc en mouvement en un ensemble de blocs élémentaires et pour chacun desdits blocs élémentaires, on analyse le mouvement et on code ledit bloc élémentaire en fonction du résultat de la détection de mouvement.

3. Procédé selon l'une quelconque des revendications 1 et 2, caractérisé en ce que, pour chaque sous-bloc, si aucun mouvement n'est détecté dans le sous-bloc, on émet un code de non-rafraîchissement dudit sous-bloc et un code d'identification dudit sous-bloc dans l'image et si un mouvement est détecté dans le sous-bloc, on recherche le vecteur de déplacement dudit sous-bloc entre l'image précédente et l'image courante, on compense le mouvement dudit sous-bloc en fonction dudit vecteur de déplacement, et on émet sur la ligne de transmission un code fonction de la compensation.

4. Procédé selon la revendication 3, caractérisé en ce que pour chaque sous-bloc compensé dont la compensation est parfaite, on émet sur la ligne de transmission un code représentatif du vecteur de déplacement et un code d'identification dudit sous-bloc dans l'image.

5. Procédé selon la revendication 3, caractérisé en ce que, pour chaque sous-bloc compensé dont la compensation n'est pas parfaite, on calcule un sous-bloc réduit égal à la différence entre le sous-bloc et son estimation, on code ledit sous-bloc réduit par un opérateur de transformation spatio-temporel, et on émet sur la ligne de transmission, un code représentatif des données contenues dans ledit sous-bloc réduit transformé quantifié et un code d'identification dudit sous-bloc dans l'image.

6. Procédé selon la revendication 3, caractérisé en ce que, pour chaque sous-bloc compensé dont la compensation n'est pas parfaite, on décompose ledit sous-bloc en blocs élémentaires, on détecte le mouvement de chaque bloc élémentaire et on émet pour chaque bloc élémentaire, sur la ligne de transmission, un code fonction du mouvement dudit bloc élémentaire.

7. Procédé selon l'une quelconque des revendications 1 et 2, caractérisé en ce que, pour chaque sous-bloc si aucun mouvement n'est détecté dans le sous-bloc, on émet sur la ligne de transmission un code de non-rafraîchissement dudit sous-bloc et un code d'identification dudit sous-bloc dans l'image et, si un mouvement est détecté dans ledit sous-bloc, on calcule un sous-bloc réduit égal à la différence entre ledit sous-bloc et le sous-bloc correspondant de l'image précédente, et à émettre sur la ligne de transmission un code fonction dudit sous-bloc réduit.

8. Procédé selon la revendication 7, caractérisé en ce que ledit code fonction dudit sous-bloc réduit est un code représentatif dudit sous-bloc réduit transformé, par un opérateur de transformation spatio-temporelle et quantifié.

**Patentansprüche**

. 1. Verfahren zur Transformationscodierung für die Übertragung eines Bildsignals über eine Übertragungsleitung, das aus einer Folge von Halbbildern besteht, die jeweils ein Bild enthalten, wobei das Verfahren eine Zerlegungsstufe des Bildes in Blöcke umfaßt, wobei ein Block eine Gruppe von digitalen Daten enthält, die in Matrixform angeordnet sind und einen Teil des Bildes repräsentiert, wobei das Verfahren für jeden Block die folgenden Stufen aufweist:

die Ermittlung der Bewegung des Blocks durch Vergleich des Blocks des laufenden Bilds mit dem entsprechenden Block des vorhergehenden Bilds, wenn keine Bewegung in dem Block ermittelt wird, die Aussendung eines Nicht-Auffrischungscodes des Blocks und eines Identifikationscodes des Blocks im Bild auf die Übertragungsleitung, und gekennzeichnet durch den folgenden Schritt: wenn eine Bewegung in dem Block ermittelt wird: die Zerlegung des Blocks in mehrere Unterblöcke, die Bewegungsermittlung in jedem Unterblock des Blocks durch Vergleich mit dem entsprechenden Unterblock des entsprechenden Blocks des vorhergehenden Bilds und die Aussendung eines Funktionscodes der Bewegung des Unterblocks auf die Übertragungsleitung.

2. Verfahren nach Anspruch 1, dadurch gekennzeichnet, daß man jeden Unterblock in Bewegung in eine Gruppe von Elementärblöcken verlegt und daß man für jeden der genannten Elementarblöcke die Bewegung analysiert und man den genannten Elementarblock in Abhängigkeit vom Resultat der Bewegungsermittlung codiert.

3. Verfahren nach einem der Ansprüche 1 und 2, dadurch gekennzeichnet, daß für jeden Unterblock, wenn keine Bewegung in dem Unterblock ermittelt wird, man einen Nicht-Auffrischungscode des Unterblocks und einen Identifikationscode des Unterblocks im Bild aussendet, und wenn eine Bewegung in dem Unterblock ermittelt wird, man den Verschiebungsvektor des genannten Unterblocks zwischen dem vorhergehenden Bild und dem laufenden Bild ermittelt, man die Bewegung des genannten Unterblocks in Abhängigkeit von dem Verschiebungsvektor kompensiert und man auf die Übertragungsleitung einen Funktionscode der Kompensation aussendet.

4. Verfahren nach Anspruch 3, dadurch gekennzeichnet, daß für jeden kompensierten Unterblock, dessen Kompensation vollständig ist, man auf die Übertragungsleitung einen Code aussendet, der für den Verschiebungsvektor repräsentativ ist, sowie einen Identifikationscode des Unterblocks im Bild.

5. Verfahren nach Anspruch 3, dadurch gekennzeichnet, daß für jeden kompensierten Unterblock, dessen Kompensation nicht vollständig ist, man einen Unterblock berechnet, der um die Differenz zwischen dem Unterbloc und seiner Abschätzung reduziert ist, man den genannten reduzierten Unterblock durch einen räumlich-zeitlichen Transformationsoperator codiert und man auf die Übertragungsleitung einen Code aussendet, der für die Daten repräsentativ ist, die in dem reduzierten, transformierten, quantisierten Unterblock enthalten sind, sowie einen Identifikationscode des genannten Unterblocks im Bild.

6. Verfahren nach Anspruch 3, dadurch gekennzeichnet, daß für jeden kompensierten Unterblock, dessen Kompensation nicht vollständig ist, man den genannten Unterblock im Elementarblöcke zerlegt, man die Bewegung jedes Elementarblocks ermittelt und man für jeden Elementarblock auf die Übertragungsleitung einen Funktionscode der Bewegung des genannten Elementarblocks aussendet.

7. Verfahren nach einem der Ansprüche 1 und 2, dadurch gekennzeichnet, daß für jeden Unterblock, wenn keine Bewegung in dem Unterblock ermittelt wird, man auf die Übertragungsleitung einen Nicht-Auffrischungscode des genannten Unterblocks und einen Identifikationscode des genannten Unterblocks im Bild aussendet und, wenn eine Bewegung in dem genannten Unterblock ermittelt wird, man einen Unterblock berechnet, der um die Differenz zwischen dem genannten Unterblock und dem entsprechenden Unterblock des vorhergehenden Bildes reduziert ist, und man auf die Übertragungsleitung einen Funktionscode des genannten reduzierten Unterblocks aussendet.

8. Verfahren nach Anspruch 7, dadurch gekennzeichnet, daß der genannte Funktionscode des genannten reduzierten Unterblocks ein Code ist, der für den reduzierten, um einen räumlich-zeitlichen und quantisierten Transformationsoperator transformierten Unterblock repräsentativ ist.

**Claims**

1. Process for coding by transformation for the transmission on a transmission line of a picture signal constituted by a sequence of frames, each containing a picture, said process comprising a stage of breaking the picture down into blocks, each block containing a group of matrix-organized digital data and representing part of the picture, the process comprising, for each block, the stages of detecting movement of the block by comparing the said block of the current picture with the corresponding block of the preceding picture, if no movement is detected in the block, transmitting on the transmission line a non-refreshing code for the block and an identification code for the block in the picture and being characterized by the following stage; if a movement is detected in the block, breaking down the block into several subblocks, detecting movement in each subblock of the block by comparing with the corresponding subblock of the corresponding block of the preceding picture and transmitting on the transmission line a code which is a function of the movement of the subblock.

2. Process according to Claim 1, characterized in that each moving subblock is broken down into a group of elementary blocks and for each of said elementary blocks the movement is analyzed and said elementary block is coded as a function of the result of the movement detection.

3. Process according to Claim 1, characterized in that, for each subblock, if no movement is detected in the subblock, a non-refreshing code of said subblock and an identification code of said subblock in the picture is transmitted and if a movement is detected in the subblock the displacement vector of said subblock between the preceding picture and the current picture is sought, the movement of said subblock is compensated as a function of said displacement vector and on the transmission line is transmitted a code which is a function of the compensation.

4. Process according to Claim 3, characterized in that for each compensated subblock, whose compensation is perfect, on the transmission line is transmitted a code representing the displacement vector and an identification code of said subblock in the picture.

5. Process according to Claim 3, characterized in that, for each compensated subblock, whose compensation is not perfect, a calculation takes place of a reduced subblock equal to the difference between the subblock and its estimate, said reduced subblock is coded by a space-time transformation operator and on the transmission line is transmitted a code representing the data contained in the quantified, transformed, reduced subblock and an identification code of said subblock in the picture.

6. Process according to Claim 3, characterized in that, for each compensated subblock, whose compensation is not perfect, said subblock is broken down into elementary blocks, the movement of each elementary block is detected and for each elementary block is transmitted on the transmission line a code which is a function of the movement of said elementary block.

7. Process according to Claim 1, characterized in that, for each subblock if no movement is detected therein, on the transmission line is transmitted a non-refreshing code of said subblock and an identification code of said subblock in the picture and, if a movement is detected in the said subblock, a reduced subblock is detected, which is equal to the difference between said subblock and the corresponding subblock of the preceding picture and on the transmission line is transmitted a code which is a function of said reduced subblock.

8. Process according to Claim 7, characterized in that said code which is a function of said reduced subblock is a code representative thereof and transformed by a space-time transformation operator and quantified.

10

FIG. 1

SIGNAL D'IMAGE

DETECTION DE MOUVEMENT

TAILLE DES S/BLOCS

$S_{BF}$

$S_{SB}$

$S_{VD}$

T

Q

$Q^{-1}$

$T^{-1}$

MEMOIRE

COMPENSATION

MUX

VERS LIGNE DE TRANSMISSION

EP 0 248 711 B1

*22*

*24*

*30*

FIG. 2a

*28*

*32*     *34*

*26*

*22*

*24*

*30*

FIG. 2b

*28*

*32*     *34*

*26*

*36*     *22*

*40*

*24*

*30*

FIG. 2c

*28*

*26*

*32*     *34*

*38*

FIG. 2d

*22*     *30a*

*30b*

*28a*     *24*

*30c*     *30*

*28*     *28b*

*30d*

*32*     *34*

*28c*     *30e*

# FIG. 3

```
                              ┌─────────┐
                              │  DEBUT  │
                              └─────────┘
                                   │
                                   ▼                              44
                              ╱─────────╲      OUI        ┌──────────────────┐
                   42        ╱   BLOC    ╲───────────────▶│  CODE DE NON-    │
                             ╲   FIXE    ╱                │ RAFRAICHISSEMENT │
                              ╲─────────╱                 └──────────────────┘
                                   │                               │
                                   │                               ▼
                                   ▼                          ┌─────────┐
          46        ┌──────────────────────┐                 │   FIN   │
                    │    DECOMPOSITION      │                 └─────────┘
                    │    EN SOUS-BLOCS      │
                    └──────────────────────┘
                                   │
                                   ▼
    48    ┌───────────────────────────────────────┐
          │      DETECTION DE MOUVEMENT            │
          │      DANS LES SOUS-BLOCS              │
          └───────────────────────────────────────┘
          │                    ┊                    │
   SOUS-BLOCS EN              ┊             SOUS-BLOCS
   MOUVEMENT                  ┊                FIXES
          │         ┌──────────────────┐          │
          │         │  REARRANGEMENT   │          │
          │         │    DU BLOC       │          │
          │         └──────────────────┘          │
          │            ┊        ┊                  │
          ▼            54                          ▼
    52  ┌──────────────────┐            ┌──────────────────┐  50
        │                  │            │  CODE DE NON-    │
        │   COMPENSATION   │            │ RAFRAICHISSEMENT │
        └──────────────────┘            └──────────────────┘
                  │                               │
                  ▼                               ▼
        ┌──────────────────┐                 ┌─────────┐
        │ CODE POUR VECTEUR DE │             │   FIN   │
        │ DEPLACEMENT (p̄,q̄) │                └─────────┘
        └──────────────────┘
          │                                          58
   54     ▼                          ┌──────────────────────┐
        ╱─────────╲                  │   TRANSFORMATION ET  │
       ╱ COMPENSATION╲  NON          │   QUANTIFICATION DU  │
       ╲ COMPLETE    ╱──────────────▶│   SOUS-BLOC          │
        ╲─────────╱                  └──────────────────────┘
   56        │                                  │
             │ OUI                               ▼
             ▼                        ┌──────────────────────┐
        ┌─────────┐                   │  CODE POUR SOUS-BLOC │
        │   FIN   │                   │ TRANSFORME ET QUANTIFIE│
        └─────────┘                   └──────────────────────┘
                                               │   60
                                               ▼
                                          ┌─────────┐
                                          │   FIN   │
                                          └─────────┘
```

3

FIG. 4

A (a) A (b) A (c) A (d)

FIG. 5

B (a) B (b) B (c) B (d)

FIG. 6

C (a) C (b)

FIG. 7

C (a) C (b) C (c) C (d)

FIG. 8

FIG. 9

$Ii$_1

$Bi$_1

$\bar{q}$

$\bar{p}$

$Ii$

$N'$

$M'$

$Bi(a,b)$

$Bi$

## FIG. 10

(56)

↓ NON

DECOMPOSITION EN
BLOCS ELEMENTAIRES — 62

↓

DETECTION DE MOUVEMENT
DANS LES BLOCS ELEMENTAIRES — 64

BLOCS
ELEMENTAIRES
EN MOUVEMENT

70

REARRANGEMENT
DU SOUS-BLOC

BLOCS
ELEMENTAIRES
FIXES

68

COMPENSATION

66

CODE DE NON-
RAFRAICHISSEMENT

↓

FIN

72

CODE POUR VECTEUR DE
DEPLACEMENT $(\bar{p},\bar{q})$

76

TRANSFORMATION ET
QUANTIFICATION DU
BLOC ELEMENTAIRE

74

COMPENSATION
COMPLETE

NON

↓ OUI

FIN

CODE POUR BLOC ELEMENTAIRE
TRANSFORME ET QUANTIFIE

78

↓

FIN